# EUROPÄISCHE PATENTSCHRIFT

(11) **EP 0 985 917 B1**
(45) Veröffentlichungstag und Bekanntmachung des Hinweises auf die Patenterteilung: **31.01.2007**
(21) Anmeldenummer: 99107516.9
(22) Anmeldetag: 15.04.1999
(51) Int. Cl.: G01F 23/296

(54) **Verfahren zum Betreiben und Funktionstesten eines Vibrationsgrenzstandsensors und hierfür geeigneter Vibrationsgrenzstandsensor**
Method for operating and testing the functioning of an ultrasonic level sensor and a sensor utilizing such a method
Procédé pour actionner et tester le fonctionnement d'un détecteur de niveau d'un fluide à ultrasons et un détecteur utilisant ce procédé.

(30) Priorität: 08.09.1998 DE 19840796
(43) Veröffentlichungstag der Anmeldung: 15.03.2000
(73) Patentinhaber: VEGA Grieshaber KG, 77709 Wolfach (DE)
(72) Erfinder: Raffalt, Felix, 77756 Hausach (DE)
(74) Vertreter: Patentanwälte Westphal, Mussgnug & Partner

(56) Entgegenhaltungen:
- WO-A-96/04630
- US-A- 5 437 178
- US-A- 5 507 178
- BAHNER M: "MEETIN SPILL PREVENTION REGULATIONS USING RF ADMITTANCE AND ULTRASONIC LEVEL MEASUREMENT TECHNOLOGIES" ADVANCES IN INSTRUMENTATION AND CONTROL,US,INSTRUMENT SOCIETY OF AMERICA, RESEARCH TRIANGLE PARK, Bd. 50, Nr. PART 02, Seite 713-720 XP000540678 ISSN: 1054-0032

## Beschreibung

Die Erfindung betrifft ein Verfahren zum Betreiben eines Vibrationsgrenzstandsensors gemäß den Merkmalen des Oberbegriffs des Anspruchs 1 und einen hierfür geeigneten Vibrationsgrenzstandsensor.

Zur Grenzstanddetektion von Schüttgütern werden Vibrationssensoren auf Basis koaxialer Rohrschwinger oder Schwinggabeln eingesetzt. Ausgewertet wird hierbei die Dämpfung der Schwingung durch den Kontakt des Resonators mit dem Füllgut.

Vibrationsgrenzstandsensoren und deren Verfahren sind bereits vielfach auch von der Anmelderin beschrieben worden. Als Beispiel für einen Vibrationsgrenzstandsensor mit koaxialen Rohrschwingern ist die DE 43 27 167 C2 zu nennen. Als Beispiel für einen Vibrationsgrenzstandsensor, der Schwinggabeln aufweist, wird auf die ebenfalls von der Anmelderin stammende EP 0 810 423 A2 verwiesen. Weitere Vibrationsgrenzstandsensoren sind in DE 44 02 234 C1 und DE 44 19 617 C2 beschrieben.

Ein Ausfall eines solchen Sensors aufgrund eines mechanischen oder elektrischen Bauteiledefekts kann schwerwiegende Sach- oder Personenschäden zur Folge haben.

Das Nicht-Ansprechen einer Behälterüberfüllsicherung kann im Falle von pulverförmigen Chemikalien oder Düngemitteln zu einer erheblichen Verseuchung der Umwelt führen, im Falle von Zementstaub oder Farbpigmenten zumindest zu einer starken Verschmutzung der Umgebung.

Der Ausfall einer Behälterleerförderschutzeinrichtung kann teure Produktions- und Anlagenstillstände bedingen.
Das Ziel der vorliegenden Erfindung besteht deshalb darin, ein Verfahren anzugeben, welches es gestattet, mit geringem Aufwand einen derartigen Vibrationsgrenzstandsensor zuverlässig auf seine Funktionsfähigkeit zu testen. Dies soll sowohl bei unbedecktem als auch bedecktem Resonator, also unbedecktem oder bedecktem koaxialen Rohrschwinger bzw.

Schwingabeln möglich sein. Ziel der Erfindung ist auch die Angabe eines hierfür geeigneten Vibrationsgrenzstandsensors.

Erreicht wird dieses Ziel für das Verfahren durch die Merkmale des Anspruchs 1 und für den Vibrationsgrenzstandsensor durch die Merkmale des Anspruchs 16.

Weiterbildungen dieser Erfindungen sind Gegenstand der Unteransprüche.

Das erfindungsgemäße Verfahren beruht also im wesentlichen darauf, dass durch testweise Umschaltung des Verstärkungsfaktors des Schwingkreisrückkoppelverstärkers des Sensors auf einen besonders niederen bzw. besonders hohen Wert die Schwingkreisschwingung bei unbedecktem Sensor künstlich gedämpft bzw. bei bedecktem Sensor zwangsweise angeregt ist.

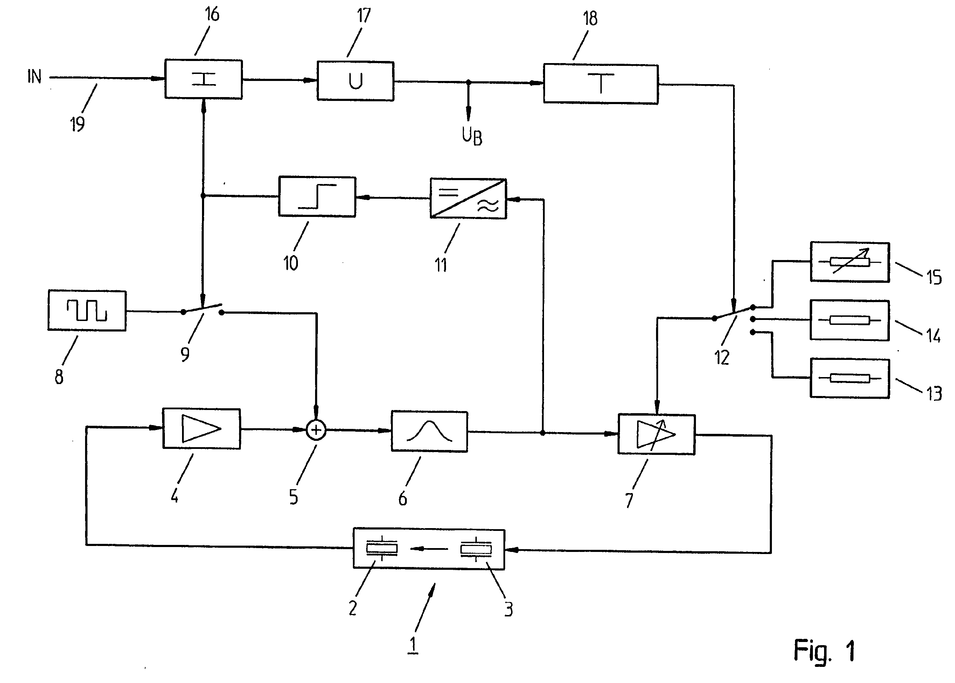

Die Erfindung wird nachfolgend zusammen mit einer einzigen Figur näher erläutert. In der einzigen Figur ist das Blockschaltbild eines Vibrationsgrenzstandsensors dargestellt.

Im einzelnen weist der Vibrationsgrenzstandsensor einen Vibrationsresonator, im folgenden kurz Resonator 1 genannt, auf. Dieser Resonator 1 verfügt über eine Antriebseinrichtung 3 und eine Detektionseinrichtung 2. Im allgemeinen sind diese Antriebseinrichtung 3 und Detektionseinrichtung 2 durch Piezostapel realisiert, die die Schwingelemente (koaxiale Rohrschwinger oder Schwinggabel) zur Schwingung antreiben bzw. deren Schwingungen detektieren. Allerdings können die Antriebseinrichtung 3 und Detektionseinrichtung 2 auch durch ein einziges Antriebs- und Detektionselement, wie in EP 0 810 423 A2 der Anmelderin ausführlich beschrieben, realisiert sein. Zum Zwecke der Offenbarung dieser Ausführungsvariante wird ausdrücklich auf EP 0 810 423 A2 Bezug genommen.
Die Detektionseinrichtung 2 ist über einen Rückkoppelverstärker auf die Antriebseinrichtung 3 rückgekoppelt. Im einzelnen besteht der Rückkoppelverstärker aus einem Eingangsverstärker 4 mit nachgeschaltetem Grundwellenbandfilter 6 und einem Endverstärker 7, dessen Verstärkungsfaktor variierbar ist. Die Anordnung des rückgekoppelten Resonators 1 bildet einen Schwingkreis.

Der Verbindungspunkt zwischen Grundwellenbandfilter 6 und Endverstärker 7 ist mit dem Eingang eines Meßgleichrichters 11 in Verbindung, der ausgangsseitig ein amplitudenproportionales Gleichspannungssignal bereitstellt und einem Komparator 10 zuführt. Der Komparator 10 ist ausgangsseitig einerseits über eine Stromstufe 16 mit einer Zweidrahtleitung 19 in Kontakt. Die Zweidrahtleitung 19 führt zu einem Auswertegerät in an sich bekannter Weise. Des weiteren ist der Ausgang des Komparators 10 als Stellsignal für einen Schalter 9 bereitgestellt. Diese Schalter 9 koppelt, sofern der Schalter 9 geschlossen ist, ein Wechselsignal eines Oszillators 8 in den Rückkoppelverstärker. Hierfür ist zwischen den Eingangsverstärker 4 und das Grundwellenbandfilter 6 eine Addierstufe 5 geschaltet, der als Eingangssignal einmal das Ausgangssignal des Eingangsverstärkers 4 und das Signal des Oszillators 8 zugeführt wird. Der Ausgang der Addierstufe 5 ist mit dem Eingang des Grundwellenbandfilters 6 in Verbindung.

Die bisher beschriebene Schaltungsanordnung des Vibrationsgrenzstandsensors und dessen Funktionsweise ist an sich bekannt und beispielsweise in der bereits eingangs erwähnten DE 43 27 167 C2 detailliert beschrieben. Zum Zwecke der Offenbarung wird insoweit auf dieses Dokument ausdrücklich Bezug genommen.

Erfindungsgemäß ist die Schaltungsanordnung jedoch erweitert, um ein Funktionstesten des Vibrationsgrenzstandsensors zu ermöglichen. Die Erweiterung besteht darin, dass an den Rückkoppelverstärker eine Verstelleinrichtung geschaltet ist, um den Dämpfungswert des Rückkoppelverstärkers gezielt zeitweise zu verändern.

Im einzelnen ist hierfür ein als Umschalter dienendes Schaltelement 12 vorgesehen, das ohmsche Einrichtungen 13, 14, 15 unterschiedlicher Widerstandswerte an den Endverstärker 7 zu dessen Verstärkungsfaktoränderung koppelt. Im Normalbetrieb befindet sich das Schaltelement 12 in der in der Figur dargestellten Stellung, so dass die ohmsche Einrichtung 15, die veränderbar ist, den Verstärkungsgrad des Endverstärkers 7 bestimmt. Allerdings kann das Schaltelement 12 zusätzlich in zwei andere Stellungen manuell oder selbsttätig (was noch zu erläutern ist) geschaltet werden. Hierfür sind die ohmschen Einrichtungen 13 und 14 vorgesehen.

Die Funktionsweise der bisher beschriebenen Schaltungsanordnung ist folgende:

Die mechanische Schwingung des Resonators 1 wird von der Detektionseinrichtung 2 in ein elektrisches Signal umgewandelt. Der Eingangsverstärker 4, das Grundwellenbandfilter 6 und der Endvertärker 7 bilden den Rückkoppelverstärker, welcher die ihm zugeführte Schwingungsdetektionsspannung in ein Antriebssignal umwandelt, das der Antriebseinrichtung 3 zugeführt wird.

Die sich in Abhängigkeit der Resonatorfüllgutbedämpfung einstellende mechanische Schwingung der Schwingelemente (Rohrschwinger oder Gabelschwinger) und damit auch die elektrische Schwingung wird vom Meßgleichrichter 11 in eine amplitudenproportionale Gleichspannung überführt. Der Komparator 10 bestimmt anhand der Gleichspannungsamplitude den Bedekkungszustand der Schwingelemente und gibt ein entsprechendes binäres Signal aus. Dieses binäre Signal steuert die Stromstufe 16 an, welche den ermittelten Füllstandswert als Stromsprungsignal auf der Zweidrahtleitung 19 ausgibt.

Durch ein Potentiometer in der ohmschen Einrichtung 15 läßt sich der Verstärkungsfaktor des Endverstärkers 7 variieren, um die Ansprechempfindlichkeit des Sensors auf Schüttgüter veschiedener Dichte einzustellen. So muß bei leichten Füllgütern, wie z.B. Styropor, eine verhältnismäßig niedrige Verstärkung gewählt werden, bei schweren Schüttgütern, wie z.B. bei Zement, dagegen ein hoher Verstärkungsfaktor.

Beim Anstehen einer Sensorvollmeldung wird das Ausgangssignal des niederfrequenten Rechteckgenerators 8 durch den Schalter 9 über die Additionsstufe 5 in den Rückkoppelverstärker eingekoppelt, um ein sicheres Wiederanschwingen des Schwingkreises auch bei mit Füllgutablagerungen behafteten mechanischem Resonator zu gewährleisten.

Der Test des Sensors geschieht durch zeitweises Umschalten des Schaltelementes 12 an die ohmschen Einrichtungen 13 bzw. 14. Anstelle der für die Abstimmung auf die jeweiligen Füllgutdichten vorgesehenen ohmschen Einrichtung 15 bestimmt dann eine der beiden ohmschen Einrichtungen 13, 14, die im einfachsten Fall als Widerstände ausgebildet sein können, den Verstärkungsfaktor des Endverstärkers 7. Die ohmsche Einrichtung 13 ergibt einen derart niedrigen Verstärkungsfaktor, dass selbst bei vollkommen unbedecktem mechanischen Resonator 1 eine selbsterhaltende Schwingung nicht mehr möglich ist. Der Sensor gibt daher bei korrekter Funktion eine Vollmeldung aus.

Die ohmsche Einrichtung 14 ist dagegen so dimensioniert, dass der Endverstärker 7 einen Verstärkungsfaktor aufweist, dass auch bei einem durch Füllgut vollständig bedeckten Resonator 1 eine Rückkoppelschwingung einsetzt. Bei einem Koaxialschwinger beginnt dabei der innere Schwingstab, welcher keinen Kontakt zum Füllgut hat, zu schwingen, so dass trotz Füllgutbedeckung die Schwingfähigkeit des Resonators 1 nachgewiesen werden kann. Bei einem Gabelresonator mit Schwinggabeln kann zumindest anhand der mechanischen Überkopplung im Antriebs-/Detektionssystem eine Erregung des Schwingkreises herbeigeführt werden. Der Oszillator 8 unterstützt in beiden Fällen wirkungsvoll das Einsetzen der erzwungenen Schwingung. Der Sensor muß daher bei korrekter Funktion testweise eine Leermeldung ausgeben.

Bei beiden Tests (Voll- und Leermeldung) wird dabei die gesamte Meßkette testweise durchlaufen und somit auf Funktion geprüft. Die Meßkette besteht hierbei aus dem mechanischen Resonator 1, dem Rückkoppelverstärker 4, 6, 7, dem Meßgleichrichter 11, dem Amplitudenkomparator 10, der als Ausgangsschaltstufe wirkenden Stromstufe 16 und einem eventuell nachgeschalteten Auswertgerät sowie der Abschalt- und Meldeorgane des Anlagenbetreibers.

Der Funktionstest des Vibrationsgrenzstandsensors kann vor Ort am Sensor mittels entsprechender Bedienelemente ausgelöst werden. Hierfür ist das Schaltelement 12 mit einem manuell zu betätigenden Bedienknopf ausgestattet.

Eine besonders vorteilhafte Ausbildungsform ist jedoch die Ferntestung von der Schalt- bzw. Leitwarte des Anlagenbetreibers aus.

Zu diesem Zweck ist der Vibrationsgrenzstandsensor über die Zweidrahtleitung 19 mit einem in der Figur nicht dargestellten Auswertgerät in der Leitzentrale verbunden. Dort kann zur Testeinleitung ein besonderes Signal generiert werden, das in einer Testablaufsteuereinheit 18 detektiert wird und zum selbsttätigen Umschalten des Schaltelementes 12 herangezogen wird. Hierfür ist beispielsweise die Stromstufe 16 über einen Spannungsregler 17 mit der Testablaufsteuereinheit 18 in Verbindung. Ausgangsseitig steht die Testablaufsteuereinheit 18 mit dem Schaltelement 12 in Kontakt, um fallweise für einen Funktionstest die Schalterstellung des Schaltelementes 12 von der dargestellten Lage so zu verändern, dass einmal die ohmsche Einrichtung 13 und einmal die ohmsche Einrichtung 14 an den Endverstärker 7 zu dessen Verstärkungsfaktoränderung geschaltet wird.

Zum Einleiten des Funktionstestes kann beispielsweise die Spannungsversorgung des Sensors kurz unterbrochen werden. Der Spannungsregler 17 kann daraufhin die sensorinterne Betriebsspannung U_{B} nicht mehr aufrechterhalten. Die Testablaufsteuereinheit 18 detektiert diese Unterbrechung der Betriebsspannung U_{B} und veranlaßt bei jedem Wiedereinschalten der Spannungsversorgung den Start des Funktionstestes. Hierfür schaltet die Testablaufsteuereinheit 18 das Schaltelement 12 zeitlich begrenzt an die ohmschen Einrichtungen 13 und 14 und generiert so eine Voll- und/oder Leermeldung. Der Anlagenbetreiber oder aber auch ein automatisiertes System prüft, ob die auszugebenden Testfüllstände hierbei korrekt vom Sensor gemeldet werden.

### BEZUGSZEICHENLISTE

- 1: Resonator
- 2: Detektionseinrichtung
- 3: Antriebseinrichtung
- 4: Eingangsverstärker
- 5: Additionsstufe
- 6: Grundwellenbandfilter
- 7: Endverstärker
- 8: Oszillator
- 9: Schalter
- 10: Komparator
- 11: Meßgleichrichter
- 12: Schaltelement
- 13: widerstand
- 14: Widerstand
- 15: veränderbarer Widerstand
- 16: Stromstufe
- 17: Spannungsregler
- 18: Testablaufsteuereinheit
- 19: Zweidrahtleitung

## Patentansprüche

1. Verfahren zum Betreiben eines Vibrationsgrenzstandsensors mit einem eine Antriebseinrichtung (3) und eine Detektionseinrichtung (2) aufweisenden Resonator (1) und einen auf einen vorgegebenen Verstärkungsfaktor eingestellten Rückkopplungsverstärker (4, 6, 7), durch welchen das Detektionssignal der Detektionseinrichtung (2) in ein der Antriebseinrichtung (3) zuführbares Antriebssignal umgewandelt wird, wobei eine vorgegebene Dämpfungsänderung der Schwingung des Resonators als Erreichen des zu überwachenden Grenzstandes ausgewertet wird,
**dadurch gekennzeichnet,**
**dass** der vorgegebene Verstärkungsfaktor des Rückkoppelverstärkers (4, 6, 7) zum Funktionstesten des Vibrationsgrenzstandsensors bei unbedecktem Resonator (1) auf einen so niedrigen Wert eingestellt wird, dass die Schwingung gedämpft wird, und dass bei bedecktem Resonator (1) auf einen so hohen Wert eingestellt wird, dass eine zwangsweise Schwingungserregung einsetzt.

2. Verfahren nach Anspruch 1, **dadurch gekennzeichnet, dass** zum Funktionstesten des Vibrationsgrenzstandsensors zwischen den verschiedenen Verstärkungsfaktoren umgeschaltet wird.

3. Verfahren nach Anspruch 1 oder 2, **dadurch gekennzeichnet, dass** der im Normalbetrieb des Vibrationsgrenzstandsensors vorgegebene Verstärkungsfaktor des Rückkoppelverstärkers einstellbar ist.

4. Verfahren nach einem der Ansprüche 1 bis 3,
**dadurch gekennzeichnet, dass** dem Rückkoppelverstärker (4, 6, 7) extern zeitweise ein Schwingungssignal zugeführt wird zum Erzielen eines sicheren Wiederanschwingens des aus Resonator (1) und Rückkoppelverstärkers (4, 6, 7) gebildeten Schwingkreises.

5. Verfahren nach einem der Ansprüche 1 bis 4,
**dadurch gekennzeichnet, dass** der niedrige Verstärkungsfaktor so gewählt ist, dass bei völlig unbedecktem Resonator (1) eine selbsterhaltende Schwingung nicht mehr möglich ist.

6. Verfahren nach einem der Ansprüche 1 bis 4,
**dadurch gekennzeichnet, dass** der hohe Verstärkungsfaktor so gewählt ist, dass auch bei einem durch Füllgut vollständig bedecktem Resonator (1) eine Rückkopplungsschwingung einsetzt.

7. Verfahren nach Anspruch 6, **dadurch gekennzeichnet, dass** der Resonator (1) ein Koaxialschwinger ist und der Beginn der Schwingung des inneren Schwingstabes des Koaxialschwingers als Funktionsnachweis ausgewertet wird.

8. Verfahren nach Anspruch 6, **dadurch gekennzeichnet, dass** der Resonator (1) ein Gabelschwinger ist und anhand der mechanischen Überkopplung in dem Antriebs-/Detektionssystem eine Erregung des Schwingkreises herbeigeführt wird.

9. Verfahren nach einem der Ansprüche 6 bis 8,
**dadurch gekennzeichnet, dass** dem Detektionssignal der Detektionseinrichtung (2) ein niederfrequentes Wechselsignal zugeführt wird, wenn das Detektionssignal eine vorgegebene Schwelle unterschreitet.

10. Verfahren nach einem der Ansprüche 1 bis 9,
**dadurch gekennzeichnet, dass** während des Funktionstestes durch Umschalten der Verstärkungsfaktoren des Rückkoppelverstärkers (4, 6, 7) bei bedecktem Resonator (1) eine Leermeldung und bei unbedecktem Resonator (1) eine Vollmeldung generiert wird, wenn der Vibrationsgrenzstandsensor fehlerfrei arbeitet.

11. Verfahren nach Anspruch 10, **dadurch gekennzeichnet, dass** während des Funktionstestes die gesamte Meßkette des Vibrationsgrenzstandsensors überprüft wird.

12. Verfahren nach einem der Ansprüche 1 bis 11,
**dadurch gekennzeichnet, dass** der Funktionstest vor Ort mittels Bedienelemente am Vibrationsgrenzstandsensor ausgelöst wird.

13. Verfahren nach einem der Ansprüche 1 bis 11,
**dadurch gekennzeichnet, dass** der Funktionstest ferngesteuert durchgeführt wird, indem ein mit Bedienelementen für den Funktionstest versehenes Auswertegerät über eine Zweidrahtleitung (19) mit dem Vibrationsgrenzstandsensor in Verbindung steht.

14. Verfahren nach Anspruch 13, **dadurch gekennzeichnet, dass** der ferngesteuerte Funktionstest durch eine vordefinierte Spannungsänderung auf der Zweidrahtleitung (19) gestartet wird.

15. Verfahren nach einem der Ansprüche 1 bis 14, **dadurch gekennzeichnet, daß** die Antriebseinrichtung (3) und die Detektionseinrichtung (2) durch ein einziges Antriebs- und zugleich Detektionselement gebildet sind.

16. Vibrationsgrenzstandsensor zur Durchführung des Verfahrens nach einem der Ansprüche 1 bis 15 mit einem eine Antriebseinrichtung (3) und eine Detektionseinrichtung (2) aufweisenden Resonator (1) und einen auf einen vorgegebenen Verstärkungsfaktor einstellbaren Rückkoppelverstärker (4, 6, 7), durch welchen das Detektionssignal der Detektionseinrichtung (2) in ein der Antriebseinrichtung (3) zuführbares Antriebssignal umwandelbar ist, wobei eine vorgegebene Dämpfungsänderung der Schwingung des Resonators (1) als Erreichen des zu überwachenden Grenzstandes in einer Auswerteeinrichtung (10, 11) ausgewertet wird,
**dadurch gekennzeichnet,**
**dass** eine Verstelleinrichtung (12, 13, 14, 15) vorgesehen ist, durch welche der Verstärkungsfaktor des Rückkoppelverstärkers (4, 6, 7) bei unbedecktem Resonator (1) auf einen so niedrigen Wert einstellbar ist, dass die Schwingung gedämpft wird, und dass bei bedecktem Resonator (1) der Verstärkungsfaktor auf einen so hohen Wert einstellbar ist, dass eine zwangsweise Schwingungsanregung erreicht wird.

17. Vibrationsgrenzstandsensor nach Anspruch 16,
**dadurch gekennzeichnet, dass** die Verstelleinrichtung ein Schaltelement (12) aufweist, durch welches ohmsche Einrichtungen (13, 14, 15) unterschiedlicher Widerstandswerte an den Rückkoppelverstärker (4, 6, 7) zur Änderung dessen Dämpfungswertes ankoppelbar sind.

18. Vibrationsgrenzstandsensor nach Anspruch 16 oder 17,
**dadurch gekennzeichnet, dass** der Rückkoppelverstärker (4, 6, 7) die Reihenschaltung eines Eingangsverstärkers (4) mit nachgeschaltetem Grandwellenbandfilter (6) und nachfolgendem Endverstärker (7) aufweist.

19. Vibrationsgrenzstandsensor nach einem der Ansprüche 16 bis 18, **dadurch gekennzeichnet, dass** die Auswerteeinrichtung einen an den Rückkoppelverstärker (4, 6, 7) angekoppelten Meßgleichrichter (11) mit nachgeschaltetem Komparator (10) aufweist, wobei der Ausgang des Komparators (10) an eine Stromstufe (16) geschaltet ist, durch welchen der ermittelte Füllstandswert als Stromsprungsignal bereitgestellt wird.

20. Vibrationsgrenzstandsensor nach Anspruch 19,
**dadurch gekennzeichnet, dass** das Stromsprungsignal der Stromstufe (16) über eine Zweidrahtleitung (19) einem Auswertegerät zuführbar ist.

21. Vibrationsgrenzstandsensor nach Anspruch 20,
**dadurch gekennzeichnet, dass** die Stromstufe 16 über einen Spannungsregler (17) und einer nachfolgenden Testablaufsteuereinrichtung (18) mit der Verstelleinrichtung (12, 13, 14, 15) in Verbindung steht, um den Funktionstest durch Variation des Verstärkungsfaktors des Rückkoppelverstärkers (4, 6, 7) selbsttätig einzuleiten.

22. Vibrationsgrenzstandsensor nach einem der Ansprüche 16 bis 21, **dadurch gekennzeichnet, dass** ein Oszillator (8) vorgesehen ist zum zeitweisen Einkoppeln eines Schwingungssignals in den Rückkoppelverstärker (4, 6, 7) zur Erzielung eines sicheren Wiederanschwingens des Schwingkreises.

23. Vibrationsgrenzstandsensor nach einem der Ansprüche 16 bis 22, **dadurch gekennzeichnet, daß** die Antriebseinrichtung (3) und die Detektionseinrichtung (2) durch ein einziges Antriebs- und zugleich Detektionselement gebildet sind.

## Claims

1. Method for operating a vibration limit level sensor comprising a resonator (1), which has a drive device (3) and a detection device (2), and a feedback amplifier (4, 6, 7) which is set to a predefined amplification factor and by means of which the detection signal of the detection device (2) is converted into a drive signal that can be fed to the drive device (3), wherein a predefined damping variation in the oscillation of the resonator is evaluated as the reaching of the limit level to be monitored,
**characterised**
**in that**, in order to functionally test the vibration limit level sensor, with the resonator (1) uncovered the predefined amplification factor of the feedback amplifier (4, 6, 7) is set to a value which is so low that the oscillation is damped, and in that with the resonator (1) covered it is set to a value which is so high that forced oscillation excitation is brought about.

2. Method according to Claim 1, **characterised in that**, in order to functionally test the vibration limit level sensor, a changeover between the different amplification factors is carried out.

3. Method according to Claim 1 or 2, **characterised in that** the predefined amplification factor of the feedback amplifier in normal operation of the vibration limit level sensor can be adjusted.

4. Method according to one of Claims 1 to 3, **characterised in that** an oscillation signal is periodically fed externally to the feedback amplifier (4, 6, 7) in order to ensure that the resonant circuit formed of the resonator (1) and the feedback amplifier (4, 6, 7) reliably builds up oscillations again.

5. Method according to one of Claims 1 to 4, **characterised in that** the low amplification factor is selected such that, with the resonator (1) fully uncovered, a self-sustaining oscillation is no longer possible.

6. Method according to one of Claims 1 to 4, **characterised in that** the high amplification factor is selected such that, even with the resonator (1) fully covered by filling material, feedback oscillation is brought about.

7. Method according to Claim 6, **characterised in that** the resonator (1) is a coaxial oscillator and the start of oscillation of the internal oscillating rod of the coaxial oscillator is evaluated as proof of functioning.

8. Method according to Claim 6, **characterised in that** the resonator (1) is a fork oscillator and excitation of the resonant circuit is brought about on the basis of the mechanical overcoupling in the drive/detection system.

9. Method according to one of Claims 6 to 8, **characterised in that** a low-frequency AC signal is fed to the detection signal of the detection device (2) if the detection signal is below a predefined threshold.

10. Method according to one of Claims 1 to 9, **characterised in that**, during the functional test by carrying out a changeover between the amplification factors of the feedback amplifier (4, 6, 7), an empty report is generated with the resonator (1) covered and a full report is generated with the resonator (1) uncovered if the vibration limit level sensor is operating correctly.

11. Method according to Claim 10, **characterised in that**, during the functional test, the entire measurement chain of the vibration limit level sensor is checked.

12. Method according to one of Claims 1 to 11, **characterised in that** the functional test is initiated in situ by means of operating elements on the vibration limit level sensor.

13. Method according to one of Claims 1 to 11, **characterised in that** the functional test is carried out in a remote-controlled manner **in that** an evaluation unit provided with operating elements for the functional test is connected to the vibration limit level sensor via a two-wire line (19).

14. Method according to Claim 13, **characterised in that** the remote-controlled functional test is started by means of a predefined voltage change on the two-wire line (19).

15. Method according to one of Claims 1 to 14, **characterised in that** the drive device (3) and the detection device (2) are formed by a single drive and detection element.

16. Vibration limit level sensor for carrying out the method according to one of Claims 1 to 15, comprising a resonator (1), which has a drive device (3) and a detection device (2), and a feedback amplifier (4, 6, 7) which can be set to a predefined amplification factor and by means of which the detection signal of the detection device (2) can be converted into a drive signal that can be fed to the drive device (3), wherein a predefined damping variation in the oscillation of the resonator (1) is evaluated in an evaluation device (10, 11) as the reaching of the limit level to be monitored,
**characterised**
**in that** an adjustment device (12, 13, 14, 15) is provided, by means of which the amplification factor of the feedback amplifier (4, 6, 7) with the resonator (1) uncovered can be set to a value which is so low that the oscillation is damped, and in that with the resonator (1) covered the amplification factor can be set to a value which is so high that forced oscillation excitation is achieved.

17. Vibration limit level sensor according to Claim 16, **characterised in that** the adjustment device has a switch element (12), by means of which ohmic devices (13, 14, 15) of different resistance values can be coupled to the feedback amplifier (4, 6, 7) in order to vary the damping value thereof.

18. Vibration limit level sensor according to Claim 16 or 17, **characterised in that** the feedback amplifier (4, 6, 7) comprises the series connection of an input amplifier (4) with a downstream fundamental wave bandpass filter (6) followed by a power amplifier (7).

19. Vibration limit level sensor according to one of Claims 16 to 18, **characterised in that** the evaluation device comprises a measuring rectifier (11), which is coupled to the feedback amplifier (4, 6, 7), with a downstream comparator (10), wherein the output of the comparator (10) is connected to a current stage (16), by means of which the determined filling level value is provided as a current signal.

20. Vibration limit level sensor according to Claim 19, **characterised in that** the current signal of the current stage (16) can be fed to an evaluation unit via a two-wire line (19).

21. Vibration limit level sensor according to Claim 20, **characterised in that** the current stage (16) is connected to the adjustment device (12, 13, 14, 15) via a voltage regulator (17) and a downstream test procedure control device (18), in order to automatically start the functional test by varying the amplification factor of the feedback amplifier (4, 6, 7).

22. Vibration limit level sensor according to one of Claims 16 to 21, **characterised in that** an oscillator (8) is provided for periodically feeding an oscillation signal into the feedback amplifier (4, 6, 7) in order to ensure that the resonant circuit reliably builds up oscillations again.

23. Vibration limit level sensor according to one of Claims 16 to 22, **characterised in that** the drive device (3) and the detection device (2) are formed by a single drive and detection element.

## Revendications

1. Procédé pour faire fonctionner un capteur de limite de vibration comprenant un résonateur (1) qui présente un dispositif d'entraînement (3) et un dispositif de détection (2), et un amplificateur de réinjection (4, 6, 7) réglé sur un facteur d'amplification prédéterminé, que convertit le signal de détection du dispositif de détection (2) en un signal d'entraînement pouvant être transmis au dispositif d'entraînement (3), selon lequel on exploite une variation d'amortissement prédéterminée de l'oscillation du résonateur comme atteinte de la limite à surveiller,
**caractérisé en ce que**
pour tester le fonctionnement du capteur de limite de vibration lorsque le résonateur (1) n'est pas recouvert, le facteur d'amplification prédéterminé de l'amplificateur de réinjection (4, 6, 7) est réglé sur une valeur suffisamment basse pour amortir l'oscillation, et lorsque le résonateur (1) est recouvert, il est réglé sur une valeur suffisamment haute pour déclencher forcément une excitation de l'oscillation.

2. Procédé selon la revendication 1,
**caractérisé en ce que**
pour tester le fonctionnement du capteur de limite de vibration, une commutation est effectuée entre les différents facteurs d'amplification.

3. Procédé selon la revendication 1 ou 2,
**caractérisé en ce que**
le facteur d'amplification de l'amplificateur de réinjection prédéterminé en fonctionnement normal du capteur de limite de vibration est réglable.

4. Procédé selon l'une des revendications 1 à 3,
**caractérisé en ce que**
l'amplificateur de réinjection (4, 6, 7) reçoit temporairement de l'extérieur un signal d'oscillation pour réaliser une réactivation sûre du circuit d'oscillation formé par le résonateur (1) et l'amplificateur de réinjection (4, 6, 7).

5. Procédé selon l'une des revendications 1 à 4,
**caractérisé en ce que**
le facteur d'amplification bas est choisi de sorte qu'une auto-oscillation n'est plus possible si le résonateur (1) est complètement découvert.

6. Procédé selon l'une des revendications 1 à 4,
**caractérisé en ce que**
le facteur d'amplification haut est choisi de sorte qu'une oscillation de réinjection est déclenchée même si le résonateur (1) est complètement recouvert par une charge.

7. Procédé selon la revendication 6,
**caractérisé en ce que**
le résonateur (1) est un oscillateur coaxial et le début de l'oscillation de la tige d'oscillation intérieure de l'oscillateur coaxial est exploité comme preuve de fonctionnement.

8. Procédé selon la revendication 6,
**caractérisé en ce que**
le résonateur (1) est un oscillateur à fourche, et une excitation du circuit d'oscillation est provoquée à l'aide du surcouplage mécanique dans le système d'entraînement/détection.

9. Procédé selon l'une des revendications 6 à 8,
**caractérisé en ce que**
le signal de détection du dispositif de détection (2) reçoit un signal de changement basse fréquence si le signal de détection passe en dessous d'un seuil prédéterminé.

10. Procédé selon l'une des revendications 1 à 9,
**caractérisé en ce que**
pendant le test de fonctionnement, par commutation des facteurs d'amplification de l'amplificateur de réinjection (4, 6, 7), on génère un message 'vide' si le résonateur (1) est recouvert, et un message 'plein' si le résonateur (1) n'est pas recouvert, si le capteur de limite de vibration travaille sans défaut.

11. Procédé selon la revendication 10,
**caractérisé en ce que**
pendant le test de fonctionnement, on vérifie la chaîne de mesure complète du capteur de limite de vibration.

12. Procédé selon l'une des revendications 1 à 11,
**caractérisé en ce que**
le test de fonctionnement est déclenché sur le site au moyen d'éléments de commande sur le capteur de limite de vibration.

13. Procédé selon l'une des revendications 1 à 11,
**caractérisé en ce que**
le test de fonctionnement est commandé à distance du fait qu'un appareil d'exploitation muni d'éléments de commande pour le test de fonctionnement est relié par une ligne bifilaire (19) au capteur de limite de vibration.

14. Procédé selon la revendication 13,
**caractérisé en ce que**
le test de fonctionnement commandé à distance est démarré par une variation de tension prédéfinie sur la ligne bifilaire (19).

15. Procédé selon l'une des revendications 1 à 14,
**caractérisé en ce que**
le dispositif d'entraînement (3) et le dispositif de détection (2) sont formés par un seul élément d'entraînement et de détection.

16. Capteur de limite de vibration pour la mise en oeuvre du procédé selon l'une des revendications 1 à 15, comprenant un résonateur (1) présentant un dispositif d'entraînement (3) et un dispositif de détection (2), et un amplificateur de réinjection (4, 6, 7) réglable sur un facteur d'amplification prédéterminé, et qui convertit le signal de détection du dispositif de détection (2) en un signal d'entraînement pouvant être transmis au dispositif d'entraînement (3), une variation de l'amortissement prédéterminée de l'oscillation du résonateur (1) étant exploitée comme atteinte de la limite à surveiller dans un dispositif d'exploitation (10, 11),
**caractérisé en ce qu'**
un dispositif de réglage (12, 13, 14, 15) permet de régler le facteur d'amplification de l'amplificateur de réinjection (4, 6, 7), si le résonateur (1) n'est pas recouvert, à une valeur suffisamment basse pour amortir l'oscillation, et si le résonateur (1) est recouvert, à une valeur suffisamment haute pour obtenir forcément une excitation de l'oscillation.

17. Capteur de limite de vibration selon la revendication 16,
**caractérisé en ce que**
le dispositif de réglage présente un élément de commutation (12) qui permet de coupler des dispositifs ohmiques (13, 14, 15) de différentes valeurs de résistance à l'amplificateur de réinjection (4, 6, 7) pour modifier la valeur d'amortissement de celui-ci.

18. Capteur de limite de vibration selon la revendication 16 ou 17,
**caractérisé en ce que**
l'amplificateur de réinjection (4, 6, 7) présente un montage en série d'un amplificateur d'entrée (4) suivi d'un filtre à bande d'ondes fondamentales (6) puis d'un amplificateur terminal (7).

19. Capteur de limite de vibration selon l'une des revendications 16 à 18,
**caractérisé en ce que**
le dispositif d'exploitation présente un redresseur de mesure (11) couplé à l'amplificateur de réinjection (4, 6, 7) suivi d'un comparateur (10), la sortie du comparateur (10) état reliée à un étage de courant (16) qui délivre la valeur de remplissage sous forme de signal de saut de courant.

20. Capteur de limite de vibration selon la revendication 19,
**caractérisé en ce que**
le signal de saut de courant de l'étage de courant (16) peut être transmis à un appareil d'exploitation par l'intermédiaire d'une ligne bifilaire (19).

21. Capteur de limite de vibration selon la revendication 20,
**caractérisé en ce que**
l'étage de courant (16) est relié par un régulateur de tension (17) suivi d'un dispositif de commande d'exécution de test (18) au dispositif de réglage (12, 13, 14, 15) pour déclencher automatiquement le test de fonctionnement par la variation du facteur d'amplification de l'amplificateur de réinjection (4, 6, 7).

22. Capteur de limite de vibration selon l'une des revendications 16 à 21,
**caractérisé en ce qu'**
un oscillateur (8) est prévu pour l'injection temporaire d'un signal d'oscillation dans l'amplificateur de réinjection (4, 6, 7), pour obtenir une réactivation sûre du circuit d'oscillation.

23. Capteur de limite de vibration selon l'une des revendications 16 à 22,
**caractérisé en ce que**
le dispositif d'entraînement (3) et le dispositif de détection (2) sont formés par un seul élément d'entraînement et de détection.
